# EUROPÄISCHE PATENTSCHRIFT

(11) **EP 0 988 203 B1**
(45) Veröffentlichungstag und Bekanntmachung des Hinweises auf die Patenterteilung: **25.08.2004**
(21) Anmeldenummer: 98937456.6
(22) Anmeldetag: 09.06.1998
(51) Int. Cl.: B60T 13/74, B60T 7/10

(54) **FESTSTELLBREMSANLAGE FÜR FAHRZEUGE**
PARKING BRAKE SYSTEM FOR VEHICLES
SYSTEME DE FREINAGE DE STATIONNEMENT POUR VEHICULES

(30) Priorität: 09.06.1997 DE 19724124
(43) Veröffentlichungstag der Anmeldung: 29.03.2000
(73) Patentinhaber: KÜSTER & Co. GmbH, 35630 Ehringshausen (DE)
(72) Erfinder: ZIPP, Jürgen, D-35619 Braunfels (DE)
(74) Vertreter: Müller, Eckhard, Dr.
(86) Internationale Anmeldenummer: PCT/EP1998/003443
(87) Internationale Veröffentlichungsnummer: WO 1998/056633

(56) Entgegenhaltungen:
- EP-A- 0 125 870
- WO-A-98/40255
- DE-A- 4 035 045
- DE-A- 4 129 919
- JP-A- 2 270 667
- US-A- 5 180 038

## Beschreibung

Die Erfindung betrifft eine Feststellbremsanlage für Fahrzeuge, insbesondere Personenkraftwagen, nach dem Oberbegriff des Anspruchs 1.

Eine solche Feststellbrensanlage ist aus JP-A-02 270 667 bekannt.

Aus der DE 42 05 590 A1 ist bereits eine Feststellbremsanlage für Kraftfahrzeuge bekannt. Mittels einer elektromotorischen, direkt auf das Bremspedal wirkenden Stelleinheit kann die Feststellbremse angezogen oder gelöst werden. Dabei erfolgt die mechanische Arretierung über ein selbsthemmend ausgelegtes Getriebe der Stelleinheit. Die Feststellbremsanlage weist eine elektronische Steuerungseinrichtung auf, wobei durch die Erfassung des Betriebsstroms des Elektromotors und des Verdrehwinkels eines Getriebestirnrades eine Aussage über den Zustand der Reibbeläge der Feststellbremse und über den Zustand der die Bremskraft übertragenden Verbindungselemente ermöglicht wird. Außerdem kann die Bremskraft kennfeldgesteuert über den Betriebsstrom des Elektromotors aufgebracht werden. Weiterhin soll auch eine vom Bremsseilweg abhängige Betätigungsgeschwindgkeit realisierbar sein.

Diese bekannte Feststellbremsanlage erweist sich jedoch insoweit als nachteilig, als die auf den Betätigungszug bzw. die Bremse wirkende Betätigungskraft nur indirekt über eine Messung des zu dem Elektromotor der Stelleinheit fließenden Stromes erfolgt. Zum einen ist diese Meßmethode recht ungenau, da der in den Elektromotor der Stelleinheit fließende Strom auch von lastunabhängigen Einflüssen, wie Temperatur o. dgl., abhängig ist. Zum anderen ist eine Kraftmessung jedenfalls dann nicht möglich, wenn der Elektromotor nicht in Gang gesetzt ist.

Demgegenüber liegt der Erfindung die Aufgabe zugrunde, eine Feststellbremsanlage mit den eingangs genannten Merkmalen dahingehend weiterzubilden, daß die auf die Bremse bzw. den Betätigungszug von dem Stellglied ausgeübte Kraft sicher erfaßbar ist.

Diese Aufgabe wird bei der Feststellbremsanlage nach Anspruch 1 gelöst. Durch diese Maßnahmen ist eine sichere und genaue Erfassung der auf den Betätigungszug bzw. die Bremse mittels des Stellgliedes ausgeübten Kraft jederzeit, insbesondere also auch dann, wenn der motorische Antrieb nicht in Betrieb befindlich ist, möglich. Desweiteren ist hiermit auch die Voraussetzung geschaffen, die auf den Betätigungszug bzw. die Bremse wirkende Kraft mittels eines Steuer- oder Regelkreises exakt, insbesondere entsprechend den Sollwertvorgaben zu dosieren. Schließlich kann auf einfache Weise die auf den Betätigungszug ausgeübte Kraft bspw. über die Erfassung der Auslenkung des Betätigungszuges erfaßt werden.

Erfindungsgemäß weist die Kraftmeßvorrichtung einen Wegsensor auf, und bevorzugt ist sie in das Stellglied integriert. Zum einen ist hierdurch ein kompakter Aufbau der Feststellbremsanlage gewährleistet, während zum anderen der Einsatz eines Wegsensors zur Erfassung der jeweiligen Kraft äußerst preiswert ist, wobei die Ausgangssignale eine genaue und eindeutige Zuordnung der entsprechenden Kraftwerte zulassen.

Nach einer anderen vorteilhaften Ausgestaltung der Erfindung erfaßt die Kraftmeßvorrichtung eine kraftabhängige Relativverschiebung zwischen dem Betätigungszug und dem Stellglied. Durch diese konstruktive Maßnahme ergibt sich eine äußerst einfache Zuordnung zwischen der Relativverschiebung zwischen Betätigungszug und dem Stellglied in Bezug auf den entsprechenden auf den Betätigungszug wirkenden Kraftwert, indem die Relativverschiebung einfach mit der Federkonstante der Rückstellkraft multipliziert wird. Insoweit können auch absolute Kraftwerte in einfacher Weise ermittelt werden.

Gemäß einer anderen vorteilhaften Ausgestaltung der Erfindung ist der Betätigungszug mit einem Widerlager fest verbunden, wobei sich das Widerlager an einer Rückstelleinheit des Stellgliedes abstützt. Diese Rückstelleinheit kann bspw. als Feder, Hydraulikkolben oder Gaspolster o. dgl. ausgebildet sein.

In einer besonders bevorzugten konstruktiven Ausgestaltung der Erfindung weist das Stellglied eine Aufnahme, z. B. eine Bohrung o. dgl. mit einem Federpaket o. dgl. Rückstelleinheit auf, wobei das Federpaket sich an einem Boden der Aufnahme einends abstützt, während das Federpaket anderenends von einem in der Aufnahme geführten Kolben o. dgl. Widerlager beaufschlagt und der Kolben fest mit dem Betätigungszug verbunden ist. Hierdurch wird eine äußerst kompakte und konstruktiv einfach ausgebildete Ausführungsform der Kraftmeßvorrichtung angegeben.

Dabei bietet es sich an, daß der Betätigungszug von dem Kolben, Widerlager o. dgl. durch eine zentrale Bohrung o. dgl. des Federpakets sowie des Bodens der Aufnahme aus der Aufnahme herausgeführt ist.

Eine axiale Führung des Kolbens o. dgl. Widerlager in der Aufnahme wird dadurch bereitgestellt, daß der Kolben einen radial abstehenden Zapfen, Bolzen o. dgl. aufweist, der in eine axiale Durchbrechung, einen Längsschlitz o. dgl. der Wand der Aufnahme eintaucht.

Zur Erfassung der kraftabhängigen Position des Kolbens in der Aufnahme ist an dem Kolben ein Magnetfeldgeber, wie bspw. Permanentmagnet angeordnet. Die Wand der Aufnahme weist im Bereich des Magnetfeldgebers von Vorteil eine Öffnung auf.

Dem Kolben ist ein Magnetfeldaufnehmer, insbesondere ein Hall-Sensor zugeordnet, der bevorzugt außerhalb der Aufnahme benachbart der Öffnung angeordnet ist. Ein Hall-Sensor wird aufgrund der Verschleißfreiheit, der weitestgehenden Temperaturunabhängigkeit der Ausgangssignale, der Rauschfreiheit der Signale und der hohen Ausgangsamplituden bevorzugt. Natürlich besteht auch die Möglichkeit, als Wegsensor bspw. ein Potentiometer vorzusehen, wobei der Mittelabgriff von dem Widerlager oder dem Kolben betätigt wird.

Nach einer anderen vorteilhaften Ausführungsform der Erfindung ist mit den Ausgangssignalen der Kraftmeßvorrichtung eine Steuer- oder Regelvorrichtung für den Antrieb beaufschlagt, wobei der Antrieb bei Übereinstimmung eines Kraftsollwertes mit einem Kraftistwert abschaltbar ist.

Weiterhin ist zwischen dem Antrieb und dem Stellglied ein Getriebe geschaltet, welches als Spindelgetriebe, Schneckengetriebe o. dgl. ausgebildet ist.

Von Vorteil ist das Getriebe selbsthemmend ausgelegt, so daß eine separte bzw. zusätzliche Sperr- oder Haltevorrichtung für das Stellglied nicht erforderlich ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: in schematischer, perspektivischer Ansicht eine Ausführungsform der erfindungsgemäßen Feststellbremsanlage,
- Figur 2: eine Draufsicht auf der Festellbremsanlage der Figur 1,
- Figur 3: einen Schnitt durch die Feststellbremsanlage der Figur 2 entlang der Schnittlinie A-A,
- Figur 4: eine Seitenansicht der Feststellbremsanlage der Figur 2,
- Figur 5: eine perspektivische Darstellung eines weiteren Ausführungsbeispiels der erfindungsgemäßen Feststellbremsanlage in perspektivischer Darstellung, wobei Teile des Gehäuses und einiger Komponenten teilweise weggebrochen dargestellt sind und die Bremse gelöst ist,
- Figur 6: die Feststellbremsanlage der Figur 5, wobei sich die Bremse im angezogenen Zustand befindet und
- Figur 7: einen Schnitt durch die Kraftmeßvorrichtung gemäß den Figuren 5 und 6 in perspektivischer Darstellung.

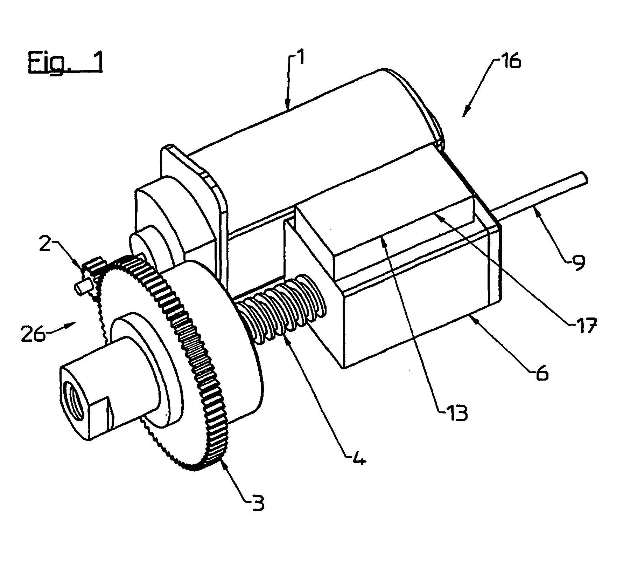

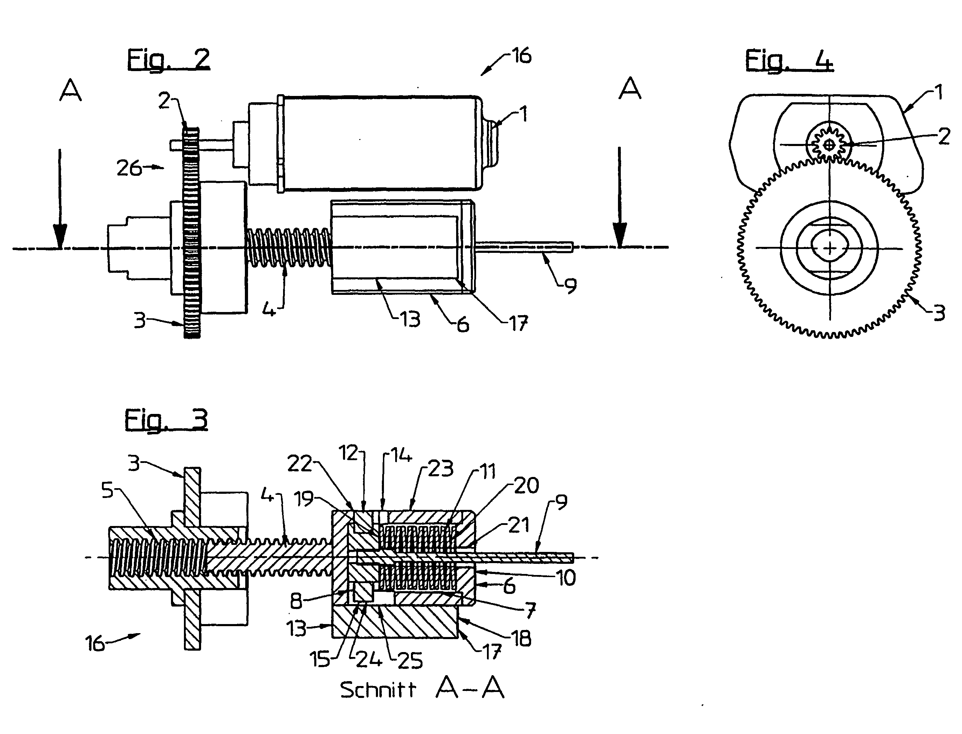

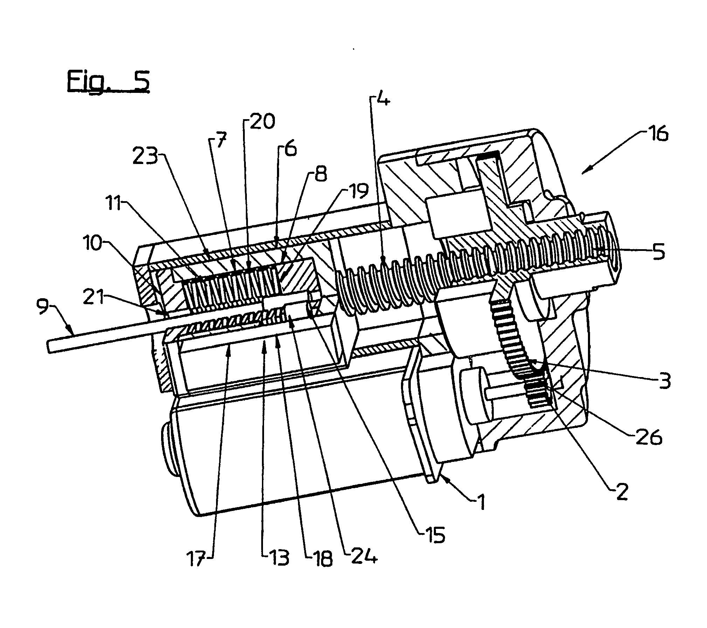

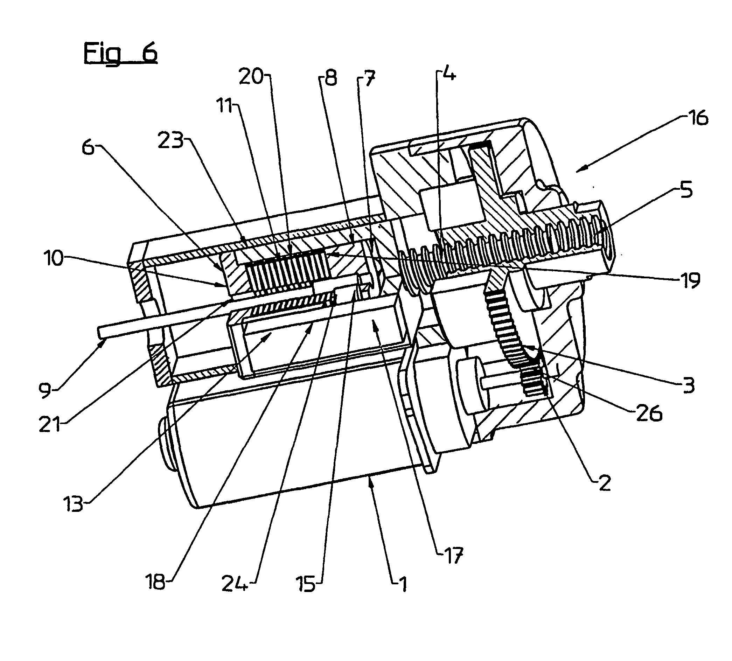

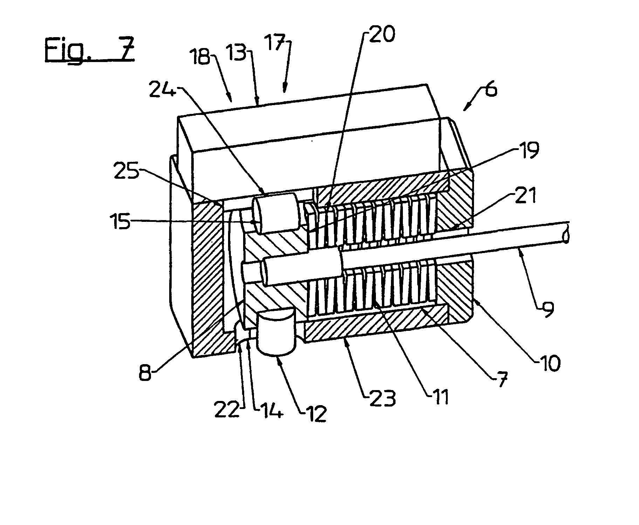

Die in den Figuren dargestellte Feststellbremsanlage für Fahrzeuge weist einen motorischen Antrieb, bspw. einen Elektromotor 1 auf, der eine Stelleinheit 16 zum Anziehen oder Lösen eines Betätigungszuges 9 einer Bremseinrichtung des Fahrzeuges betätigt. Die Stelleinheit 16 besitzt ein mittels des Antriebes verstellbares Stellglied 6 für den Betätigungszug 9. Dem Stellglied 6 ist eine Kraftmeßvorrichtung 17 zugeordnet, die die auf den Betätigungszug 9 mittels des Stellgliedes 6 ausgeübte Kraft unmittelbar erfaßt. Insbesondere weist die Kraftmeßvorrichtung 17 einen Wegsensor 18 auf und ist bevorzugt in das Stellglied 6 integriert. Der Betätigungszug 9 ist gegen die Wirkung einer Rückstellkraft auslenkbar mit dem Stellglied 6 verbunden, wobei die Kraftmeßvorrichtung 17 eine kraftabhängige Relativverschiebung zwischen dem Betätigungszug 9 und dem Stellglied 6 erfaßt. Der Betätigungszug 9 ist mit einem Widerlager 19 fest verbunden, wobei sich das Widerlager 19 an einer Rückstelleinheit 20 des Stellgliedes 6 abstützt.

Im einzelnen weist das Stellglied 6 eine Aufnahme, z. B. eine Bohrung 7 mit einem Federpaket 11 oder einer dgl. ausgebildeten Rückstelleinheit 20 auf. Das Federpaket 11 stützt sich an einem Boden 10 der Aufnahme einends ab. Anderenends ist das Federpaket 11 von einem in der Aufnahme geführten Kolben 8 o. dgl. Widerlager 19 beaufschlagt. Der Kolben 8 ist mit dem Betätigungszug 9 fest verbunden und durch eine zentrale Bohrung 21 des Federpakets 11 und des Bodens 10 aus der Aufnahme herausgeführt. Der Kolben 8 besitzt einen radial abstehenden Zapfen, Bolzen 12 o. dgl., der in eine axiale Durchbrechung 22, einen Längsschlitz 14 o. dgl. der Wand 23 der Aufnahme eintaucht. An dem Kolben 8 ist ein Magnetfeldgeber 24, z. B. ein Permanentmagnet oder sonstiger Magnet 15, angeordnet. Benachbart dieses Magnetfeldgebers 24 ist in der Wand 23 der Aufnahme eine Öffnung 25 vorgesehen. Dem Kolben 8 ist desweiteren ein Magnetfeldaufnehmer 13, insbesondere mit einer zugeordneten Auswertevorrichtung, zugeordnet. Bei dem Magnetfeldaufnehmer 13 kann es sich insbesondere um einen Hall-Sensor handeln. Dieser Magnetfeldaufnehmer 13 ist außerhalb der Aufnahme benachbart der Öffnung 25 positioniert.

Mit den Ausgangssignalen der Kraftmeßvorrichtung 17 wird eine Steuer- oder Regelvorrichtung für den Antrieb beaufschlagt, wobei bevorzugt der Antrieb bei Übereinstimmung eines Kraftsollwertes mit einem Kraftistwert abschaltbar ist. Der Kraftsollwert kann bspw. in einem Speicher abgelegt oder von dem Fahrer des Fahrzeuges durch entsprechende Eingaben vorgegeben sein. Weiterhin ist zwischen dem Antrieb und dem Stellglied 6 ein Getriebe 26 geschaltet. Das Getriebe besteht aus einem Ritzel 2, welches von dem Elektromotor 1 angetrieben wird. Das Ritzel 2 steht mit einem Zahnrad 3 in Eingriff, wobei dieses Zahnrad 3 ein Innengewinde 5 aufweist, welches in Eingriff mit einer Gewindespindel 4 steht. Die Gewindespindel 4 ist fest mit dem Stellglied 6 verbunden, wobei das Stellglied vorzugweise einen rechteckförmigen Querschnitt aufweist. Somit sorgt eine Inbetriebnahme des Elektromotors 1 je nach Drehrichtung für eine Verschiebung des Stellgliedes 6 in die eine oder in die andere Richtung.

Selbstverständlich ist es auch möglich, daß das mit dem Ritzel 2 in Eingriff stehende Zahnrad 3 fest mit der Gewindespindel 4 verbunden ist, welche ihrerseits in Eingriff mit dem Innengewinde 5 des Stellgliedes 6 steht.

Das Getriebe 26 ist bevorzugt als Spindelgetriebe ausgebildet, kann jedoch auch in Form eines Schneckengetriebes o. dgl. ausgebildet sein. In jeder Ausführungsform des Getriebes 26 erweist es sich als vorteilhaft, dieses Getriebe 26 selbsthemmend auszulegen, so daß eine ansonsten zusätzlich erforderlich werdende Halte- oder Verriegelungsvorrichtung für das Stellglied 6 entbehrlich ist.

Durch die beschriebene Ausbildung der Kraftmeßvorrichtung 17 wird bei einer Betätigung der Stelleinheit 16 zum Anziehen der Bremse das Stellglied 6 in Richtung des Zahnrades 3 axial verschoben. Allmählich baut sich über dem Betätigungszug 9 beim Anziehen der Bremsen eine Zugspannung auf, welche aufgrund der Abstützung des Betätigungszuges 9 an dem Federpaket 11 zu einem Zusammenpressen des Federpaketes 11 führt. Infolge dessen bewegt sich der mit dem Betätigungszug 9 verbundene Kolben 8 nicht soweit in Richtung des Zahnrades 3 wie das Stellglied 6 selbst. Mit anderen Worten ausgedrückt heißt das, daß der Kolben 8 bzw. der Betätigungszug 9 mit wachsender Betätigungskraft eine Relativverschiebung bzgl. des Stellgliedes 6 weg von dem Zahnrad 3 erfährt. Der ortsfest an dem Stellglied 6 befestigte Wegsensor erfaßt diese Verschiebung und liefert somit ein der Betätigungskraft proportionales Signal.

Dieses Signal kann ohne weiteres zu Steuer- oder Regelzwecken verwendet werden.

Eine besonders einfache Ausgestaltung des Wegsensors 18 besteht darin, daß der Betätigungszug 9 bzw. der mit dem Betätigungszug 9 verbundene Kolben 8 mit einem Magnetfeldgeber 24 und das Stellglied 6 mit einem ortsfest an diesem angeordneten Magnetfeldaufnehmer bzw. Magnetfeldsensor 13 ausgestattet sind.

### Bezugszeichenliste

- 1: Elektromotor
- 2: Ritzel
- 3: Zahnrad
- 4: Gewindespindel
- 5: Innengewinde
- 6: Stellglied
- 7: Bohrung
- 8: Kolben
- 9: Betätigungszug
- 10: Boden
- 11: Federpaket
- 12: Bolzen
- 13: Auswertevorrichtung mit Magnetfeldsensor
- 14: Längsschlitz
- 15: Magnet
- 16: Stelleinheit
- 17: Kraftmeßvorrichtung
- 18: Wegsensor
- 19: Widerlager
- 20: Rückstelleinheit
- 21: Bohrung
- 22: axiale Durchbrechung
- 23: Wand
- 24: Magnetfeldgeber
- 25: Getriebe
- 26: Öffnung

## Patentansprüche

1. Feststellbremsanlage für Fahrzeuge, insbesondere Personenkraftwagen, mit einer einen motorischen Antrieb, bspw. einen Elektromotor (1) aufweisenden Stelleinheit (16) zum Anziehen oder Lösen eines Betätigungszuges (9) einer Bremseinrichtung des Fahrzeuges, wobei die Stelleinheit (16) ein mittels des Antriebes verstellbares Stellglied (6) für den Betätigungszug (9) aufweist, dem Stellglied (6) eine Kraftmessvorrichtung (17) zugeordnet und die Kraftmessvorrichtung (17) mit dem Betätigungszug (9) gekoppelt ist und von der Kraftmessvorrichtung (17) die auf den Betätigungszug (9) mittels des Stellgliedes (6) ausgeübte Kraft unmittelbar erfasst wird, **dadurch gekennzeichnet, dass** der Betätigungszug (9) gegen die Wirkung einer Rückstellkraft auslenkbar mit dem Stellglied (6) verbunden ist und die Kraftmessvorrichtung (17) einen Wegsensor (18) aufweist, wobei die Kraftmessvorrichtung (17) eine kraftabhängige Relativverschiebung zwischen dem Betätigungszug (9) und dem Stellglied (6) erfasst.

2. Feststellbremsanlage nach Anspruch 1, **dadurch gekennzeichnet, dass** die Kraftmessvorrichtung (17) in das Stellglied (6) integriert ist.

3. Feststellbremsanlage nach Anspruch 1 oder 2, **dadurch gekennzeichnet, dass** der Betätigungszug (9) mit einem Widerlager (19) fest verbunden ist.

4. Feststellbremsanlage nach Anspruch 3, **dadurch gekennzeichnet, dass** das Widerlager (19) sich an einer Rückstelleinheit (20) des Stellgliedes (6) abstützt.

5. Feststellbremsanlage nach einem der vorhergehenden Ansprüche, **dadurch gekennzeichnet, daß** das Stellglied (6) eine Aufnahme, z. B. eine Bohrung (7) o. dgl., mit einem Federpaket (11) o. dgl. Rückstelleinheit (20) aufweist und das Federpaket (11) o. dgl. sich an einem Boden (10) der Aufnahme einends abstützt, während das Federpaket (11) o. dgl. anderenends von einem in der Aufnahme geführten Kolben (8) o. dgl. Widerlager (19) beaufschlagt und der Kolben (8) fest mit dem Betätigungszug (9) verbunden ist.

6. Feststellbremsanlage nach Anspruch 5, **dadurch gekennzeichnet, daß** der Betätigungszug (9) von dem Kolben (8) durch eine zentrale Bohrung (21) des Federpakets (11) sowie des Bodens (10) aus der Aufnahme herausgeführt ist.

7. Feststellbremsanlage nach einem der Ansprüche 5 oder 6, **dadurch gekennzeichnet, daß** der Kolben (8) o. dgl. Widerlager (19) einen radial abstehenden Zapfen, Bolzen (12) o. dgl. aufweist, der in eine axiale Durchbrechung (22), einen Längsschlitz (14) o. dgl. der Wand (23) der Aufnahme eintaucht.

8. Feststellbremsanlage nach einem der Ansprüche 5 bis 7, **dadurch gekennzeichnet, daß** an dem Kolben (8) ein Magnetfeldgeber (24), wie ein Magnet (15), angeordnet ist und bevorzugt die Wand (23) der Aufnahme im Bereich des Magnetfeldgebers (24) eine Öffnung (25) aufweist.

9. Feststellbremsanlage nach einem der Ansprüche 5 bis 8, **dadurch gekennzeichnet, daß** dem Kolben (8) o. dgl. ein Magnetfeldaufnehmer (13), insbesondere ein Hall-Sensor o. dgl. zugeordnet ist, der bevorzugt außerhalb der Aufnahme benachbart der Öffnung (25) an dem Stellglied angeordnet ist.

10. Feststellbremsanlage nach einem der vorhergehenden Ansprüche, **dadurch gekennzeichnet, daß** mit den Ausgangssignalen der Kraftmeßvorrichtung (17) eine Steueroder Regelvorrichtung für den Antrieb beaufschlagt ist, wobei der Antrieb bei Übereinstimmung eines Kraftsollwertes mit einem Kraftistwert abschaltbar ist.

11. Feststellbremsanlage nach einem der vorhergehenden Ansprüche, **dadurch gekennzeichnet, daß** zwischen Antrieb und Stellglied (6) ein Getriebe (26) geschaltet ist, das Getriebe als Spindelgetriebe, Schneckengetriebe o. dgl. ausgebildet ist.

12. Feststellbremsanlage nach Anspruch 11, **dadurch gekennzeichnet, daß** das Getriebe (26) selbsthemmend ausgelegt ist.

## Claims

1. Parking brake system for vehicles, particularly passenger cars, with a setting unit (16), which has a motorised drive, for example an electric motor (1), for applying or releasing an actuating pull (9) of braking equipment of the vehicle, wherein the setting unit (16) comprises a setting element (6), which is adjustable by means of the drive, for the actuating pull (9), the setting element (6) being associated with a force measuring device (17) which is coupled with the actuating pull (9), and the force exerted on the actuating pull (9) by means of the setting element being directly detected by the force measuring device (17), **characterised in that** the actuating pull (9) is connected with the setting element (6) to be deflectable against the action of a restoring force and the force measuring device (17) comprises a travel sensor (18), wherein the force measuring device (17) detects a force-dependent relative displacement between the actuating pull (9) and the setting element (6).

2. Parking brake system according to claim 1, **characterised in that** the force measuring device (17) is integrated in the setting element (6).

3. Parking brake system according to claim 1 or 2, **characterised in that** the actuating pull (9) is fixedly connected with a counter-bearing (19).

4. Parking brake system according to claim 3, **characterised in that** the counter-bearing (19) is supported at a resetting unit (20) of the setting element (6).

5. Parking brake system according to one of the preceding claims, **characterised in that** the setting element (6) comprises a receptacle, for example a bore (7) or the like, with a spring packet (11) or like resetting unit (20) and the spring packet (11) or the like is supported at one end at a base (10) of the receptacle, whilst the spring packet (11) or the like is loaded at the other end by a piston (8), which is guided in the receptacle, or like counter-bearing (19) and the piston (8) is fixedly connected with the actuating pull (9).

6. Parking brake system according to claim 5, **characterised in that** the actuating pull (9) is led from the piston (8) out of the receptacle through a central bore (21) of the spring packet (11 ) as well as of the base (10).

7. Parking brake system according to one of claims 5 and 6, **characterised in that** the piston (8) or like counter-bearing (19) comprises a radially projecting pin, bolt (12) or the like, which engages in an axial passage (22), a longitudinal slot (14) or the like of the wall (23) of the receptacle.

8. Parking brake system according to one of claims 5 to 7, **characterised in that** a magnetic field transmitter (24), such as a magnet (15), is arranged at the piston (8) and the wall (23) of the receptacle preferably has an opening (25) in the region of the magnetic field transmitter (24).

9. Parking brake system according to one of claims 5 to 8, **characterised in that** the piston (8) or the like is associated with a magnetic field pick-up (13), particularly a Hall sensor or the like, which is preferably arranged at the setting element outside the receptacle adjacent to the opening (25).

10. Parking brake system according to one of the preceding claims, **characterised in that** a control or regulating device for the drive is acted on by the output signals of the force measuring device (17), wherein the drive can be switched off in the case of agreement of a force target value with a force actual value.

11. Parking brake system according to one of the preceding claims, **characterised in that** a gear (26) is connected between drive and setting element (6), which gear is constructed as a spindle gear, worm gear or the like.

12. Parking brake system according to claim 11, **characterised in that** the gear (26) is formed to be self-locking.

## Revendications

1. Système de frein de stationnement pour un véhicule, en particulier pour un véhicule particulier, comportant une unité de réglage (16) qui présente un entraînement motorisé, par exemple un moteur électrique (1), et qui est destinée à serrer ou desserrer un câble d'actionnement (9) d'un dispositif de freinage du véhicule, dans lequel l'unité de réglage (16) présente un organe (6) de réglage du câble d'actionnement (9) réglable au moyen de l'entraînement, dans lequel un dispositif dynamométrique (17) est associé à l'organe de réglage (6) et dans lequel le dispositif dynamométrique (17) est couplé au câble d'actionnement (9), et en ce que le dispositif dynamométrique (17) enregistrant directement la force exercée sur le câble d'actionnement (9) au moyen de l'organe de réglage (6), **caractérisé en ce que** le câble d'actionnement (9) est relié à l'organe de réglage (6) de façon à pouvoir se déployer contre l'effet d'une force de rappel et **en ce que** le dispositif dynamométrique (17) comprend un capteur de course (18), le dispositif dynamométrique (17) enregistrant un déplacement relatif qui dépend de la force entre le câble d'actionnement (9) et l'organe de réglage (6).

2. Système de frein de stationnement selon la revendication 1, **caractérisé en ce que** le dispositif dynamométrique (17) est intégré dans l'organe de réglage (6).

3. Système de frein de stationnement selon la revendication 1 ou 2, **caractérisé en ce que** le câble d'actionnement (9) est relié de façon fixe avec une butée.

4. Système de frein de stationnement selon la revendication 3, **caractérisé en ce que** la butée (19) s'appuie contre une unité de rappel (20) de l'organe de réglage (6).

5. Système de frein de stationnement selon l'une des revendications précédentes, **caractérisé en ce que** l'organe de réglage (6) présente un logement, par exemple un perçage (7) ou analogue, ayant un bloc de ressort (11) ou une unité de rappel analogue (20) et **en ce que** le bloc de ressort (11) ou analogue s'appuie à une extrémité au niveau d'un fond (10) du logement, alors que le bloc de ressort (11) ou analogue est à l'autre extrémité chargé par un piston (8) ou une butée analogue (19), guidé dans le logement, le piston (8) étant relié de façon fixe au câble d'actionnement (9).

6. Système de frein de stationnement selon la revendication 5, **caractérisé en ce que** le câble d'actionnement (9) est guidé hors du logement par le piston (8) via un perçage central (21 ) du bloc de ressort (11) et du fond (10).

7. Système de frein de stationnement selon l'une des revendications 5 ou 6, **caractérisé en ce que** le piston (8) ou la butée analogue (19) présente un tourillon radial saillant, un boulon (12) ou analogue qui plonge dans un passage axial (22), une fente longitudinale (14) ou analogue de la paroi (23) du logement.

8. Système de frein de stationnement selon l'une des revendications 5 à 7, **caractérisé en ce qu'**est disposé au niveau du piston (8) un transmetteur de flux magnétique (24), ainsi qu'un aimant (15) et **en ce que** de préférence la paroi (23) du logement présente une ouverture (25) dans la zone du transmetteur de flux magnétique (24).

9. Système de frein de stationnement selon l'une des revendications 5 à 8, **caractérisé en ce qu'**au piston (8) ou analogue est associé un capteur de flux magnétique (13), en particulier un capteur à effet Hall ou analogue, qui est de préférence disposé, au niveau de l'organe de réglage, en dehors du logement et près de l'ouverture (25).

10. Système de frein de stationnement selon l'une des revendications précédentes, **caractérisé en ce qu'**avec les signaux de sortie du dispositif dynamométrique (17), on alimente un dispositif de commande ou de régulation de l'entraînement, l'entraînement pouvant être déconnecté en cas de concordance entre une valeur de force théorique et une valeur de force instantanée.

11. Système de frein de stationnement selon l'une des revendications précédentes, **caractérisé en ce qu'**entre l'entraînement et l'organe de réglage (6) est commuté un engrenage (26), l'engrenage étant conçu en tant qu'engrenage à broche, engrenage à vis sans fin ou analogue.

12. Système de frein de stationnement selon la revendication 11, **caractérisé en ce que** l'engrenage (26) est conçu pour être auto-bloquant.
